# EUROPEAN PATENT APPLICATION

(11) **EP 3 101 290 A1**
(43) Date of publication of application: **07.12.2016**
(21) Application number: 15742739.4
(22) Date of filing: 27.01.2015
(51) Int. Cl.: F16C 17/10, F16C 11/06

(54) **CURVED SLIDING LINER AND CURVED SLIDING MEMBER**

(30) Priority: 31.01.2014 JP 2014016588
(71) Applicant: Toray Industries, Inc., Tokyo 103-8666 (JP)
(72) Inventor: TONOMORI, Keiichi, Otsu-shi Shiga 520-2141 (JP); TSUCHIKURA, Hiroshi, Otsu-shi Shiga 520-2141 (JP); TOKUDA, Akihiro, Otsu-shi Shiga 520-2141 (JP)
(74) Representative: Webster, Jeremy Mark
(86) International application number: PCT/JP2015/052158
(87) International publication number: WO 2015/115409

(57) **Abstract**

An object of the present invention is to provide a curved sliding unit having stable sliding performance and long service life. The present invention discloses a curved sliding liner in a bowl shape obtained by rolling a ribbon-shaped woven cloth so as to form steps in the width direction of the ribbon. The present invention also discloses a curved sliding unit including an external member, the curved sliding liner disposed inside the external member, and an internal member disposed inside the curved sliding liner.

## Description

### TECHNICAL FIELD

The present invention is a curved sliding liner that is for use in a curved sliding unit having a curved sliding part and configured to provide sliding movement and that is disposed between an internal member and an external member holding the internal member to show sliding characteristics. The present invention is, for example, a curved sliding liner applicable to curved sliding units such as spherical bearings, rod end bearings, roller bearings, ball joints, and artificial joints.

### BACKGROUND ART

A curved sliding unit, which is constituted by an internal member having a curved sliding portion and an external member holding the internal member with a curved sliding liner made of resin therebetween, has been used in various applications.

It is well known that a fluorocarbon resin is used as the sliding liner to increase the slidability of the curved sliding unit.

However, the fluorocarbon resin is a soft, weak resin and therefore may not have sufficient shape retainability, wear resistance, scratch resistance, and the like. Furthermore, it has been pointed out that there is a problem in that it is difficult to mold the fluorocarbon resin and thus difficult to obtain dimensional accuracy of the molded product conforming to the curved shape and sliding clearance.

On the other hand, for the purpose of solving such drawbacks, some sliding liners made of a woven cloth in the form of a sheet containing a fluorine-containing fiber instead of the fluorocarbon resin have been proposed.

For example, in Patent Document 1, a fiber-based woven cloth obtained by knitting polyester fibers or glass fibers and fluorocarbon resin fibers, which serves as a liner, is pressure-bonded to the inner surface of an outer metal ring of a spherical plain bearing.

Patent Document 2 discloses a lubricating liner, for use in a spherical plain bearing, which is constituted by a fabric made of PTFE (polytetrafluoroethylene) fibers and polyaramide fibers and which is impregnated with a phenol resin composition.

Patent Document 3 discloses that, in a non-lubricant sliding member such as a spherical plain bearing, one of the sliding surfaces is a polytetrafluoroethylene fabric liner, and also shows an example in which this fabric liner is fixed to the concave spherical sliding surface.

### PRIOR ART DOCUMENTS

### PATENT DOCUMENTS

Patent Document 1: Japanese Patent Laid-open Publication No. 5-18412
Patent Document 2: Japanese Patent Laid-open Publication No. 2007-255712
Patent Document 3: Japanese Patent Laid-open Publication No. 2013-087852

### SUMMARY OF THE INVENTION

### PROBLEMS TO BE SOLVED BY THE INVENTION

The sliding liner for use in a curved sliding unit as described above freely changes its shape. However, it is difficult to bring the cloth in the form of a sheet into close contact with the curved sliding surface. Due to occurrence of wrinkles and adhesion unevenness and the like, problems such as unstable sliding performance and partial wear have not been solved completely.

In view of such circumstances, an object of the present invention is to provide a curved sliding unit that suppresses partial wear and that has stable sliding performance and long service life.

### SOLUTIONS TO THE PROBLEMS

In order to attain this object, the present invention has the following configurations including preferred aspects.
(1) A curved sliding liner in a bowl shape including a ribbon-shaped cloth rolled so as to form steps in the width direction of the ribbon-shaped cloth.
(2) The curved sliding liner of (1), wherein the ribbon-shaped cloth is a woven cloth.
(3) The curved sliding liner of (1), wherein the ribbon-shaped cloth is a warp-knitted cloth.
(4) Any of the curved sliding liners as described above, wherein an end of the ribbon-shaped cloth coincides with the axis about which the ribbon-shaped cloth is rolled.
(5) Any of the curved sliding liners as described above, wherein the ribbon-shaped cloth contains a fluorine-containing fiber and one or more fibers other than the fluorine-containing fiber.
(6) Any of the curved sliding liners as described above, wherein at least part of the ribbon-shaped cloth is hardened by impregnation with resin.
(7) Any of the curved sliding liners as described above, wherein: the ribbon-shaped cloth contains the fluorine-containing fiber and another fiber(s); and at least part of the fluorine-containing fiber is exposed on a surface of the curved sliding liner.
(8) Any of the curved sliding liners as described above, wherein the fluorine-containing fiber extends lengthwise at least one of the opposite side edges in the width direction of the ribbon-shaped cloth.
(9) Any of the curved sliding liners as described above, wherein the ribbon-shaped cloth contains, in an area other than the opposite side edges in the width direction of the ribbon-shaped cloth, one or more fibers selected from glass fibers, polyparaphenylene terephthalamide fibers, fully aromatic polyester fibers, carbon fibers, and PBO fibers.
(10) Any of the curved sliding liners as described above, wherein the ribbon-shaped cloth has, in a position next to the fluorine-containing fiber at least one of the opposite side edges in the width direction of the ribbon-shaped cloth, one or more fibers selected from polyester fibers, nylon fibers, PPS fibers, and polymethaphenylene isophthalamide fibers.
(11) A curved sliding unit including: an external member; a curved sliding liner disposed inside the external member; and an internal member disposed inside the curved sliding liner, the curved sliding liner being any of the curved sliding liners as describe above.
(12) The curved sliding unit described above, wherein the curved sliding liner has at least one of the following shapes:
   i) a concave inner surface of the bowl shape fits a shape of a convex surface of the internal member; and
   ii) a convex outer surface of the bowl shape fits a concave surface of the external member.
(13) A method for producing a curved sliding liner including rolling a ribbon-shaped cloth into a bowl shape so as to form steps in a width direction of the ribbon-shaped cloth.
(14) The method of (13), which is a method for producing any of the curved sliding liners as described above.

### EFFECTS OF THE INVENTION

According to the present invention, it is possible to provide a curved sliding unit that suppresses partial wear and that has stable sliding performance and long service life.

### BRIEF DESCRIPTION OF THE DRAWINGS

Fig. 1 shows an example of a curved sliding liner of an embodiment of the present invention.
Fig. 2 schematically shows an example of a method of attaching the curved sliding liner to an internal member.
Fig. 3 schematically shows an example of a curved sliding unit constituted by an internal member, a curved sliding liner, and an external member, which are assembled together.

### EMBODIMENTS OF THE INVENTION

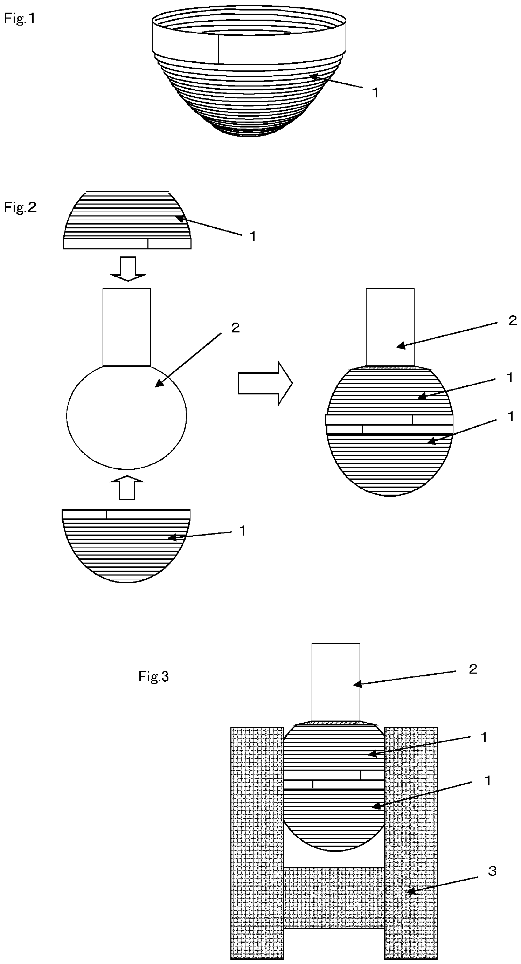

The following describes a curved sliding liner and a sliding member of the present invention with reference to Figs. 1 to 3.

Fig. 1 shows one example of a curved sliding liner of an embodiment of the present invention. Fig. 2 schematically shows an example of a method of attaching a curved sliding liner to an internal member. Fig. 3 schematically shows one example of a curved sliding unit constituted by an internal member, a curved sliding liner, and an external member, which are assembled together. It should be noted here that the extremal member is shown in a cross-sectional view.

It should be noted that a curved sliding liner 1 and a curved sliding unit constituted by the curved sliding liner 1, an internal member 2, and an external member 3 shown in the attached drawings are merely examples of the present invention and are simply and schematically illustrated for the description.

The sliding liner 1 of the present invention is, as shown in Fig. 1 for example, in a bowl shape obtained by rolling a ribbon-shaped cloth in a manner such that an end of the ribbon-shaped cloth coincides with the axis about which the ribbon-shaped cloth is rolled and that steps are formed appropriately in the width direction of the ribbon. It should be noted here that the ribbon-shaped cloth is usually rolled while being overlapped with displacement in the width direction. According to the example shown in Fig. 2, the concave inner surface of the bowl-shaped body has a shape that fits the convex surface of the internal member 2. Although not illustrated in the drawings, the convex outer surface of the bowl-shaped body may have a shape that fits the concave surface of the external member.

Examples of the curved sliding liner include curved sliding liners having a spherical sliding surface, a curved sliding surface in the shape of a partial spherical surface, a curved sliding surface that does not necessarily have to be a spherical surface but is freely slidable, a curved sliding surface having a depression or a protrusion that restricts the slidable area, a curved sliding surface in the shape of a partial cylinder, or the like. Of these, the sliding liners having a spherical sliding surface or a partial spherical sliding surface are used for a ball joint, a spherical bearing, or the like. These sliding liners require particularly high-level free slidability and therefore the present invention is particularly effective for such sliding liners.

The curved sliding liner of the present invention may be used in a curved sliding member including an external member, a curved sliding liner disposed inside the external member, and an internal member disposed inside the curved sliding liner. The sliding member is preferably connected to one hardware with the external member therebetween and connected to another hardware with the internal member therebetween and is structured such that the directions of the external member and the internal member are movable about the substantial center of the sliding member utilizing the sliding occurring inside the sliding member. Examples of the sliding member of the present invention include the following aspects.
i) A sliding member that includes: an external member having a sliding surface facing a curved sliding liner; the curved sliding liner having sliding surfaces facing the external member and an internal member, respectively; and the internal member having a sliding surface facing the curved sliding liner.
ii) A sliding member in which: an external member and a curved sliding liner are joined together; the curved sliding liner has a sliding surface facing an internal member; and the internal member has a sliding surface facing the curved sliding liner.
iii) A sliding member in which: an external member has a sliding surface facing a curved sliding liner; the curved sliding liner and an internal member are joined together; and the curved sliding liner has a sliding surface facing the external member.

Here, examples of the internal member include: a member called a ball stud or the like in the case of a ball joint; and a member called an inner ring or the like in the case of a curved bearing.

Similarly, examples of the external member include: a member called a socket or a housing or the like in the case of a ball joint: and a member called an outer ring or the like in the case of a curved bearing.

It should be noted that the sliding liner whose concave inner surface is a sliding surface may serve also as the external member when the sliding liner is given a shape retainability. In this case, the separately-provided material for the external member may be omitted and the curved sliding unit may be constituted by a combination of the sliding liner serving also as the external member with the internal member.

Usually, it is difficult to bend a straight ribbon-shaped cloth in plane without wrinkles. However, the ribbon-shaped cloth can be freely bent in directions other than the in-plane directions. In view of such circumstances, the ribbon-shaped cloth is rolled into the bowl shape by being rolled from one end in a manner such that the end coincides with the axis about which the ribbon-shaped cloth is rolled and that appropriate steps are formed as going from inside to outside in the radial direction. By adjusting the degree and conditions of the steps, it is possible to obtain a curved surface that is necessary to bring the ribbon-shaped cloth into close contact with the surface of the external member or the surface of the internal member. When the curved surface is formed, the steps on the ribbon may be adjusted optimally by using as a base the convex surface of the internal member and/or the concave surface of the external member so as to fit the convex surface of the internal member and/or the concave surface of the external member.

The bowl-shaped body may have a cutout or a hole, depending on the shapes of the internal and external members and a member to which the bowl is attached. Alternatively, the sliding liner may be combined with another member.

Two bowl shapes may be placed on top of each other so that the edges of the bowl shapes fit each other, whereby a spherical shape or a substantially spherical shape may be obtained. It is only necessary to place the internal member inside the two bowl-shaped bodies before the two bowl-shaped bodies are placed on top of each other.

Alternatively, it is possible to employ a structure in which the width of the ribbon-shaped cloth is increased or reduced along the length in advance so that the steps are formed and a curved surface is formed when the ribbon-shaped cloth is rolled in the form of a spiral. In this case, for example, it is possible to achieve a structure in which the concave inner surface has a curved surface and the convex outer surface is in the shape of a cylinder, or the like. In this way, the sliding liner of the present invention may be structured such that the concave inner surface has a sliding surface whereas the convex outer surface has a shape other than the bowl shape so as to be readily held by the external member. It is also possible to employ a structure in which a single sliding liner itself serves also as the external member and thereby omit a separate external member.

The fibers constituting the ribbon-shaped cloth of the sliding liner may either be organic fibers or inorganic fibers. It is especially preferable that a highly-slidable fiber be contained in the fibers constituting the ribbon-shaped cloth. Examples of the highly-slidable fiber include fluorine-containing fibers, polypropylene fibers, and polyethylene fibers.

The ribbon-shaped cloth of the sliding liner more preferably contains a fluorine-containing fiber and one or more fibers other than the fluorine-containing fiber. The fluorine-containing fiber has a low-friction slidability and a polytetrafluoroethylene fiber is preferably used. The material constituting the polytetrafluoroethylene fiber is, for example, a homopolymer of tetrafluoroethylene or a copolymer that contains tetrafluoroethylene in an amount of 90 mol% or more, preferably 95 mol% or more, with respect to the entire copolymer. In view of sliding characteristics, the amount of the tetrafluoroethylene unit is preferably larger, and a homopolymer is more preferred.

Examples of the monomers that can be copolymerized with the tetrafluoroethylene include, but are not limited to: vinyl fluoride compounds such as trifluoroethylene, trifluorochloroethylene, tetrafluoropropylene, and hexafluoropropylene; and vinyl compounds such as propylene, ethylene, isobutylene, styrene, and acrylonitrile. Of these monomers, vinyl fluoride compounds, especially compounds containing a large amount of fluorine, are preferred in view of fiber-friction characteristics.

Meanwhile, the fluorine-containing fiber is soft. For the bowl shape to be retained (for the rigidity to be improved), it is preferable that one or more fibers other than the fluorine-containing fiber be contained. Examples of such fibers include: polyparaphenylene terephthalamide, polymethaphenylene isophthalamide, glass, carbon, polyparaphenylene benzobisoxazole (PBO), polyphenylene sulfide (PPS), and fully aromatic polyester fibers. These fibers may be used solely or two or more of these may be used.

The ribbon-shaped cloth may be any of woven cloths, knitted cloths, and non-woven cloths. A woven cloth and warp-knitted cloth in which an intended fiber can be readily exposed on the sliding surface are preferably used.

The curved sliding liner of the present invention is preferably structured such the fluorine-containing fiber contained in the curved sliding liner is partially exposed on a portion serving as the inner sliding surface and/or a portion serving as the outer sliding surface of the curved sliding liner. To this end, it is preferable that at least one of the opposite side edges in the width direction of the ribbon-shaped cloth, which corresponds to the portion serving as the inner sliding surface and/or the portion serving as the outer sliding surface, have the fluorine-containing fiber extending in the length direction. As used herein, the side edge denotes an area also including a portion around the side edge. In order to cause the fluorine-containing fiber to be exposed on both of the inner and outer surfaces, it is only necessary to provide the fluorine-containing fiber at the opposite side edges in the width direction of the ribbon-shaped cloth. In order to cause the fluorine-containing fiber to be exposed either on the inner surface or the outer surface, it is only necessary to provide the fluorine-containing fiber at one of the opposite side edges in the width direction of the ribbon-shaped cloth. In either case, such a ribbon-shaped cloth may be obtained by providing the fluorine-containing fiber as an outermost warp thread during weaving.

The number of fluorine-containing fibers at least one of the opposite side edges in the width direction of the woven cloth may be one or two or more. It is preferable that the fluorine-containing fiber be positioned so that at least part of the fluorine-containing fiber is exposed on the sliding surface when the ribbon is rolled into a bowl shape.

When the fluorine-containing fiber is provided only at one side edge of the ribbon-shaped cloth, the fluorine-containing fiber is exposed either on the inner surface or the outer surface. In this case, by providing another fiber at the other side edge, it is possible to achieve desired sliding characteristics or to impart wear resistance, heat resistance, heat conductivity, electric conductivity, or the like corresponding to the characteristics of such another fiber.

In the case where a fluorine-containing fiber is provided as an outermost lengthwise fiber (warp thread) in the ribbon-shaped woven cloth, the fluorine-containing fiber may also be used in the fibers that cross the warp threads (such fibers are weft threads). In this case, at the side edge extending lengthwise of the ribbon-shaped cloth, both the warp and weft threads are fluorine-containing fibers. This increases the percentage of the fluorine-containing fibers exposed on the surface of the bowl-shaped body, that is, on the sliding surface of the bowl-shaped body, and thus improves the sliding characteristics. Furthermore, in the case of a ribbon-shaped warp-knitted cloth, by increasing the number of fluorine-containing fibers accounting for the lengthwise fibers (warp threads) at the side edge, the fluorine-containing fibers become readily exposed on the sliding surface. This improves sliding characteristics. Furthermore, in view of dimensional stability, warp-knitted cloths such as tricot and Raschel are preferred.

Furthermore, in order to improve the shape retainability of the entire body, it is preferable to provide a highly rigid fiber such as a glass fiber, polyparaphenylene terephthalamide fiber, fully aromatic polyester fiber, carbon fiber, or PBO fiber in an area other than the side edges extending lengthwise of the ribbon-shaped cloth. Of these, it is more preferable to provide a glass fiber, which is both useful and rigid.

Furthermore, it is preferable to provide a polyester fiber, nylon fiber, PPS fiber, polymethaphenylene isophthalamide fiber, or the like next to the fluorine-containing fiber at the side edge extending lengthwise of the ribbon-shaped cloth. These fibers are highly resistant to crushing. The fluorine-containing fiber is likely to be crushed upon receiving a load during sliding. However, the fluorine-containing fiber stays in the woven structure or knitted structure of such fibers which are next to the fluorine-containing fiber and which are highly resistant to crushing, and therefore the fluorine-containing fiber at least partially stays at the sliding surface. This makes it possible to keep good sliding performance. Although the foregoing glass fiber also has the effects of keeping the crushed fluorine-containing fiber inside the woven structure as well as such fibers, such fibers are more preferable than the glass fiber in consideration of the possibility that such fibers themselves are exposed on the sliding surface. Of such fibers, a PPS fiber, which is highly heat resistant and highly chemical resistant, is more preferred. Therefore, also in the case where a highly-rigid fiber is provided mainly in the entire body, it is more preferable to provide a polyester fiber, nylon fiber, PPS fiber, polymethaphenylene isophthalamide fiber, or the like between the fluorine-containing fiber at the side edge and the highly-rigid fiber.

The number of polyester fibers, nylon fibers, PPS fibers, polymethaphenylene isophthalamide fibers, or the like in this case is not limited to one and may be two or more. In view of the effects to back up the wear resistance and low friction property of the fluorine-containing fiber and in view of costs, the number of fibers is preferably three or less. The fibers may be of a monofilament or multifilament type.

When the ribbon-shaped cloth is rolled in the foregoing manner, if the ribbon-shaped cloth is rolled tightly, the layers of the cloth are tightly pressed together and friction between the layers of the cloth increases and the shape retainability of the body increases. The end of the rolled cloth may be fixed. The shape may be retained with more certainty by a method of rolling the ribbon-shaped cloth while applying an adhesive to the ribbon-shaped cloth, a method of placing the rolled ribbon-shaped cloth into a mold and fixing the rolled ribbon-shaped cloth, a method of impregnating the body with resin and curing the resin, or the like.

Of these, the method of impregnating the cloth with resin and curing the resin is effective. It is preferable that at least part of the cloth be impregnated with resin and cured. When the resin cures, the cloth rolled in the form of a spiral is unlikely to become loose and the shape retainability increases and the cloth becomes easily handleable, and also the sliding characteristics of the liner become stable.

Furthermore, in order for the sliding liner to serve also as the external member, it is effective to increase the shape retainability.
Impregnating the cloth with resin is good to possibly increase the shape retainability. The resin for impregnation here may be a thermosetting resin or a thermoplastic resin. In the case where a thermosetting resin is used, the thermosetting resin is dissolved in a solvent to form a varnish, the varnish is impregnated into and coated on the ribbon-shaped cloth of the present invention by knife coating, roll coating, comma coating, gravure coating, or the like, and then the ribbon-shaped cloth may be rolled into a bowl shape and cured by heat. It is also possible to employ a method in which the ribbon-shaped cloth is rolled into a bowl shape and thereafter the cloth is impregnated with resin by, for example, dipping or spotting and cured by heat. In the case where a thermoplastic resin is used, the ribbon-shaped cloth may be rolled into a bowl shape and thereafter impregnated with heat-melt resin. Although the body in the shape of a bowl may be entirely impregnated with resin, the body may be partially impregnated with resin or a particular portion may be provided with resin by spot adhesion according to need.

The resin to be impregnated into the body is not particularly limited. Preferred examples of the thermosetting resin include phenol resin, melamine resin, urea resin, unsaturated polyester resin, epoxy resin, polyurethane resin, diallyl phthalate resin, silicone resin, polyimide resin, vinyl ester resin, and the like and modified versions of these resins. Preferred examples of the thermoplastic resin include: vinyl chloride resin, polystyrene, ABS resin, polyethylene, polypropylene, fluorocarbon resin, polyamide resin, polyacetal resin, polycarbonate resin, polyester, polyamide, and the like; synthetic rubbers or elastomers such as thermoplastic polyurethane, butadiene rubber, nitrile rubber, neoprene, and polyester; and mixtures of those listed above. Of these, epoxy resin and phenol resin are preferably used in view of shock resistance, dimensional stability, strength, surface hardness, price, and the like.

These thermosetting resins and thermoplastic resins may contain any of various additives which are usually used in the industrial fields for the purpose of improving productivity during production and processes or improving characteristics. For example, a denaturant, plasticizer, filler, mold release agent, colorant, diluent, and/or the like may be contained.

It should be noted that the resin impregnated in or attached to undesired portions or the like of the cloth is preferably removed. The resin may be removed after the cloth is impregnated with the resin, after the cloth impregnated with the resin is rolled into a bowl shape, while the resin is cured or after the resin is cured in the bowl-shaped body, or the like. In particular, the resin impregnated in or attached to a portion serving as a sliding surface is preferably removed.

### EXAMPLES

The following describes Examples in which a spherical sliding liner for a ball joint was prepared as an aspect of the present invention.

### [Example 1]

A ball stud constituted by a 40 mm diameter ball-shaped sliding portion and a shaft portion connected to the ball-shaped sliding portion was prepared as an internal member of the ball joint.

Next, a ribbon-shaped woven cloth to be formed into a spherical sliding liner was prepared in the following manner.

First, a 440 dtex, 60 filament polytetrafluoroethylene fiber, a 220 dtex, 50 filament PPS fiber, and a 337 dtex, 400 filament glass fiber were prepared as original yarns. The polytetrafluoroethylene fiber was used as a binding yarn. Warp threads were two polytetrafluoroethylene fibers, one PPS fiber, twenty-four glass fibers, and four PPS fibers arranged in this order from the binding yarn. A weft thread was a PPS fiber. These fibers were woven in a 4/4 twill weave so that the weaving density would be 157 warp threads per inch and 96 weft threads per inch. In this way, a ribbon-shaped woven cloth 5 mm in width was prepared. It should be noted that, because of the characteristics of a ribbon loom, weft threads were passed two by two. Then, the ribbon-shaped woven cloth was heat set at 150°C.

Next, the obtained ribbon-shaped woven cloth was rolled spirally into a bowl shape in the following manner.

A 40 mm diameter stainless-steel ball was prepared as a base mold, and a 1 mm diameter stainless-steel pin was disposed on the ball so that a length of 5 mm of the pin was exposed.

The ribbon-shaped woven cloth was cut into a length of 3 m, immersed in an epoxy resin (which is obtained by adding 5 mass% of an EMZ-S available from SANYU REC CO. , LTD. as a curing accelerator to a DR-082 available from SANYU REC CO., LTD.), and thereafter an excess resin at the surface of the woven cloth was squeezed out with a roll press. Next, using the 40 mm diameter stainless-steel ball previously prepared, an end of the ribbon-shaped woven cloth was wrapped around the stainless-steel pin on the ball. Here, the ribbon-shaped woven cloth was wrapped around the pin in a manner such that the binding yarn-side edge of the cloth (polytetrafluoroethylene fiber-side edge of the cloth) was in contact with the stainless-steel ball. A length of 3 meters of the ribbon-shaped woven cloth was wrapped around the stainless-steel ball in a manner such that the side edge (polytetrafluoroethylene fiber-side edge) of the ribbon-shaped woven cloth was always in contact with the surface of the stainless-steel ball. In this way, a bowl-shaped body wrapped around half the stainless-steel ball was obtained. The stainless-steel ball was removed, the resin remaining on the concave inner surface of the bowl-shaped body and on the stainless-steel ball was wiped off with acetone, and thereafter the bowl-shaped body was again fitted to the stainless-steel ball. The bowl-shaped body in this state was placed in a drier with the concave surface of the bowl-shaped body facing up, and treated with heat at 150°C for 1 hour and thereby the resin was cured. Just in case, an epoxy resin was applied to the convex outer surface of the bowl-shaped body and treated with heat again at 150°C for 1 hour to ensure the external shape and hardness of the bowl-shaped body. The dry amount of the epoxy resin attached to the bowl-shaped body was 27 mass%.

In this way, a cured bowl-shaped body was obtained. The cured bowl-shaped body was placed over the ball stud which is constituted by the 40 mm diameter ball-shaped sliding portion and the shaft portion connected to the sliding portion and which serves as an actual internal member, and the bowl-shaped body and the ball stud shaft were moved with hands. As a result, it was confirmed that the bowl-shaped body and the ball stud shaft were able to freely move smoothly while in close contact with each other. This demonstrated that the bowl-shaped body was effective as a spherical sliding liner.

### [Example 2]

An internal member of a ball joint was the same as the ball stud used in Example 1.

A ribbon-shaped warp-knitted cloth to be formed into a spherical sliding liner was prepared in the following manner.

A 440 dtex, 60 filament polytetrafluoroethylene fiber and a 220 dtex, 50 filament PPS fiber were prepared as original yarns. Two such polytetrafluoroethylene fibers were provided at one of the opposite side edges in the width direction, and six PPS fibers were provided next to the polytetrafluoroethylene fibers. A ribbon-shaped warp-knitted cloth 5 mm in width was prepared with the use of a Raschel loom.

Next, the obtained ribbon-shaped warp-knitted cloth was impregnated with an epoxy resin in the same manner as in Example 1, and thereafter an excess resin was squeezed out, and thereafter the cloth was wrapped around the stainless-steel ball spirally into a bowl shape. The bowl-shaped body was placed over the ball stud of Example 1, and the bowl-shaped body and the ball stud shaft were moved with hands. As a result, it was confirmed that the bowl-shaped body and the ball stud shaft were able to freely move smoothly while in close contact with each other. This demonstrated that the bowl-shaped body was effective as a spherical sliding liner.

### DESCRIPTION OF REFERENCE SIGNS

- 1:: Curved sliding liner
- 2:: Internal member
- 3:: External member

## Claims

1. A curved sliding liner in a bowl shape, comprising a ribbon-shaped cloth rolled so as to form steps in a width direction of the ribbon-shaped cloth.

2. The curved sliding liner according to claim 1, wherein the ribbon-shaped cloth is a woven cloth.

3. The curved sliding liner according to claim 1, wherein the ribbon-shaped cloth is a warp-knitted cloth.

4. The curved sliding liner according to any of claims 1 to 3, wherein an end of the ribbon-shaped cloth coincides with an axis about which the ribbon-shaped cloth is rolled.

5. The curved sliding liner according to any of claims 1 to 4, wherein the ribbon-shaped cloth contains a fluorine-containing fiber and one or more fibers other than the fluorine-containing fiber.

6. The curved sliding liner according to any of claims 1 to 5, wherein at least part of the ribbon-shaped cloth is hardened by impregnation with resin.

7. The curved sliding liner according to any of claims 1 to 6, wherein: the ribbon-shaped cloth contains a/the fluorine-containing fiber and another fiber(s); and at least part of the fluorine-containing fiber is exposed on a surface of the curved sliding liner.

8. The curved sliding liner according to claim 7, wherein the fluorine-containing fiber extends lengthwise at least one of the opposite side edges in the width direction of the ribbon-shaped cloth.

9. The curved sliding liner according to any of claims 1 to 8, wherein the ribbon-shaped cloth contains, in an area other than the opposite side edges in the width direction of the ribbon-shaped cloth, one or more fibers selected from glass fibers, polyparaphenylene terephthalamide fibers, fully aromatic polyester fibers, carbon fibers, and PBO fibers.

10. The curved sliding liner according to any of claims 7 to 9, wherein the ribbon-shaped cloth has, in a position next to a/the fluorine-containing fiber at least one of the opposite side edges in the width direction of the ribbon-shaped cloth, one or more fibers selected from polyester fibers, nylon fibers, PPS fibers, and polymethaphenylene isophthalamide fibers.

11. A curved sliding unit comprising: an external member; a curved sliding liner disposed inside the external member; and an internal member disposed inside the curved sliding liner, the curved sliding liner being the curved sliding liner recited in any of claims 1 to 10.

12. The curved sliding unit according to claim 11, wherein the curved sliding liner has at least one of the following shapes:
i) a concave inner surface of the bowl shape fits a shape of a convex surface of the internal member; and
ii) a convex outer surface of the bowl shape fits a concave surface of the external member.

13. A method for producing a curved sliding liner comprising rolling a ribbon-shaped cloth into a bowl shape so as to form steps in a width direction of the ribbon-shaped cloth.

14. The method according to claim 13, which is a method for producing the curved sliding liner recited in any of claims 1 to 10.
